# EUROPÄISCHE PATENTSCHRIFT

(11) **EP 1 500 834 B1**
(45) Veröffentlichungstag und Bekanntmachung des Hinweises auf die Patenterteilung: **10.01.2007**
(21) Anmeldenummer: 04014211.9
(22) Anmeldetag: 17.06.2004
(51) Int. Cl.: F16C 33/46

(54) **Zylinderrollenlager**
Cylindrical roller bearing
Roulement à rouleaux cylindriques

(30) Priorität: 22.07.2003 DE 20311207 U
(43) Veröffentlichungstag der Anmeldung: 26.01.2005
(73) Patentinhaber: AB SKF, 41550 Göteborg (SE)
(72) Erfinder: Weidinger, Alfred, 97464 Niederwerrn (DE)
(74) Vertreter: Kohl, Thomas

(56) Entgegenhaltungen:
- DE-A- 4 129 111
- US-A- 3 647 273
- US-A- 5 033 878

## Beschreibung

Die Erfindung betrifft ein Zylinderrollenlager, das einen Innenring, einen Außenring, zwischen diesen angeordnete Zylinderrollen mit einem definierten Rollendurchmesser sowie einen Käfig für die Führung der Zylinderrollen aufweist, wobei der Käfig zwei parallel zueinander angeordnete Seitenringe aufweist, die durch Stege miteinander verbunden sind, wobei die Seitenringe und die Stege Aufnahmetaschen für die Zylinderrollen bilden und wobei die Seitenringe so ausgebildet sind, dass sie zur Führung des Käfigs mit einer radialen Endfläche an sich radial erstreckenden Borden an einem der Lagerringe anlaufen.

Zylinderrollenlager der gattungsgemäßen Art sind im Stand der Technik hinlänglich bekannt. Sie sind in der Regel mit Käfigen ausgestattet, die die Führung der Wälzkörper in Umfangsrichtung bewerkstelligen. Ein derartiger Käfig für ein Zylinderrollenlager ist beispielsweise aus der **DE 41 29 111 C2** aus der **US 3,647,273** und aus der **US 5,033,878** bekannt.

Zur Führung des Käfigs muss dieser an mindestens einem Bauteil des Lagers anlaufen. Die eine Möglichkeit besteht darin, den Käfig rollenzuführen, d.h. ihn so auszubilden, dass im Betrieb des Wälzlagers vorgesehen ist, dass sich die Lage des Käfigs durch Anlage an die Wälzkörper ergibt. Alternativ dazu ist es möglich, den Käfig schultergeführt auszubilden; in diesem Falle läuft der Käfig mit einer radialen Grenzfläche an einer Schulter (Bord) des Lagers an und wird dadurch geführt.

Weiterhin sind diverse Arten zur Herstellung solcher Käfige bekannt. Neben spritzgegossenen Kunststoffkäfigen kommen Metallkäfige zum Einsatz, die zumeist aus einem Ringelement gefräst werden. Hierbei werden die Taschen zur Aufnahme der Wälzkörper in den Grundkörper des Käfigs spanend eingearbeitet.

Bei einteiligen gefrästen Massivkäfigen, die für die Schulterführung vorgesehen sind, sind Nachteile beobachtet worden. Durch den Fertigungsprozess (Fräsen) kommt es zumeist zu keiner besonders guten Schmiegung zwischen den Wälzkörpern und den Aufnahmetaschen für diese. Zum Halten der Wälzkörper in der gewünschten Position weisen die Käfige Haltenasen auf, die im Steg angebracht sind; durch die relativ massive Ausbildung sind die Federeigenschaften derartiger Haltenasen schlecht, weshalb die Montage des Lagers schwierig ist. Ferner ist bei schultergeführten Käfigen der eingangs genannten Art nachteilhaft, dass die Wälzkörper oft einen großen Durchhang haben, also mit zu viel Toleranz in der Aufnahmetasche des Käfigs positioniert sind.

Der Erfindung liegt daher die **Aufgabe** zugrunde, ein Zylinderrollenlager der eingangs genannten Art derart weiterzubilden, dass die genannten Nachteile vermieden werden. Namentlich soll ein schultergeführter Käfig für ein Zylinderrollenlager geschaffen werden, der eine gute Schmiegung zwischen Aufnahmetaschen und Wälzkörpern aufweist und bei dem der Rollendurchhang minimiert ist. Weiterhin soll ein Augenmerk darauf gerichtet sein, dass eine möglichst einfache Montage des Zylinderrollenlagers möglich ist.

Die **Lösung** dieser Aufgabe durch die Erfindung ist dadurch gekennzeichnet, dass die der Zylinderrolle zugewandte Fläche des Steges über eine vorgegebene radiale Erstreckung des Steges eine einzige der Kreisform der Zylinderrolle angepasste Kontur aufweist und dass an mindestens einer axialen Stegposition ein Haltevorsprung für die Zylinderrolle angeordnet ist, der sich von einer radialen Übergangsposition ab an die der Kreisform der Zylinderrolle angepasste Kontur anschließt, der sich radial nach innen erstreckt und der sich mit seiner der Zylinderrolle zugewandten Fläche im wesentlichen parallel zur radialen Richtung des Käfigs über eine radiale Erstreckung ausdehnt, die zwischen 5 % und 15 % des Rollendurchmessers liegt, wobei der Mittelpunkt des die angepasste Kontur bildenden einzigen Kreisbogens radial weiter weg von der Drehachse des Zylinderrollenlagers liegt als der Mittelpunkt der Zylinderrolle im montierten Zustand des Zylinderrollenlagers.

Mit Vorteil ist vorgesehen, dass der Steg im Bereich der axialen Stegposition, in der der Haltevorsprung angeordnet ist, eine Ausdehnung in radialer Richtung aufweist, die über die radiale Erstreckung des Steges hinausgeht.

Die Schmiegung wird dadurch optimiert, dass die der Kreisform der Zylinderrolle angepasste Kontur im Schnitt eine Kreisform aufweist, deren Radius größer ist als der der Zylinderrolle. Mit Vorteil ist diesbezüglich vorgesehen, dass der Radius der angepassten Kontur das 1,002- bis 1,3-fache des Radius der Zylinderrolle beträgt.

Mit der vorgeschlagenen Ausgestaltung werden verschiedene Vorteile erreicht:

Die beschriebene Ausbildung des Haltevorsprungs bzw. der Haltevorsprünge für die Zylinderrolle erlaubt ein Federn während des Montagevorgangs des Lagers, was für das Einschnappen der Zylinderrollen sehr wichtig ist. Die Haltevorsprünge sind aus der Basiskontur des Käfigs bzw. namentlich der Stege frei gestellt und radial nach innen verlängert, wodurch die Montage begünstigt wird.

Ferner ergibt sich durch die definierte Ausgestaltung des Zylinderrollenlagers und insbesondere seines Käfigs eine gute Schmiegung zwischen Aufnahmetasche für die Zylinderrolle und der Zylinderrolle.

Hierdurch wird auch der Schmierfilmaufbau in der Aufnahmetasche begünstigt.

Weiterhin ist der Rollendurchhang, verglichen mit vorbekannten Lösungen, reduziert und es wird ein Anlaufen der Zylinderrollen unter dem Teilkreis erlaubt.

Infolge der verbesserten Schmierung ergibt sich eine hohe Haltbarkeit des Zylinderrollenlagers. Die Führung der Zylinderrollen ist verbessert und kann dem speziellen Profil der Aufnahmetasche gut angepasst werden. Durch die definierte Ausgestaltung des Lagers ist außerdem die Spannungskonzentration im Käfig optimiert, so dass sich auch insofern eine hohe Gebrauchsdauer des Zylinderrollenlagers ergibt.

In der Zeichnung ist ein Ausführungsbeispiel der Erfindung dargestellt. Es zeigen:
- Figur 1: ein Zylinderrollenlager gemäß dem Schnitt C-D (siehe Figur 3),
- Figur 2: den Käfig des Zylinderrollenlagers gemäß dem Schnitt C-D (siehe Figur 3) ohne Zylinderrollen und
- Figur 3: den Schnitt durch das Zylinderrollenlager gemäß dem Schnitt A-B (siehe Figur 2) ohne Innen- und Außenring.

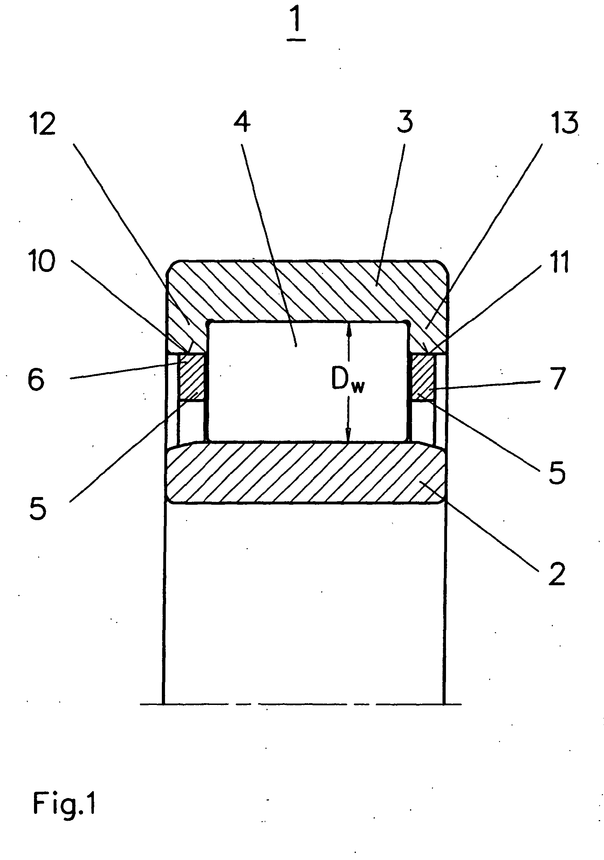

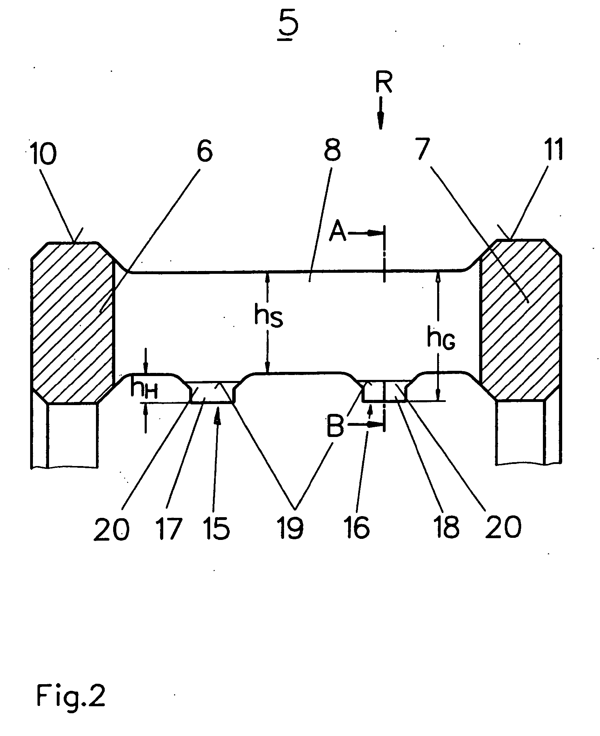

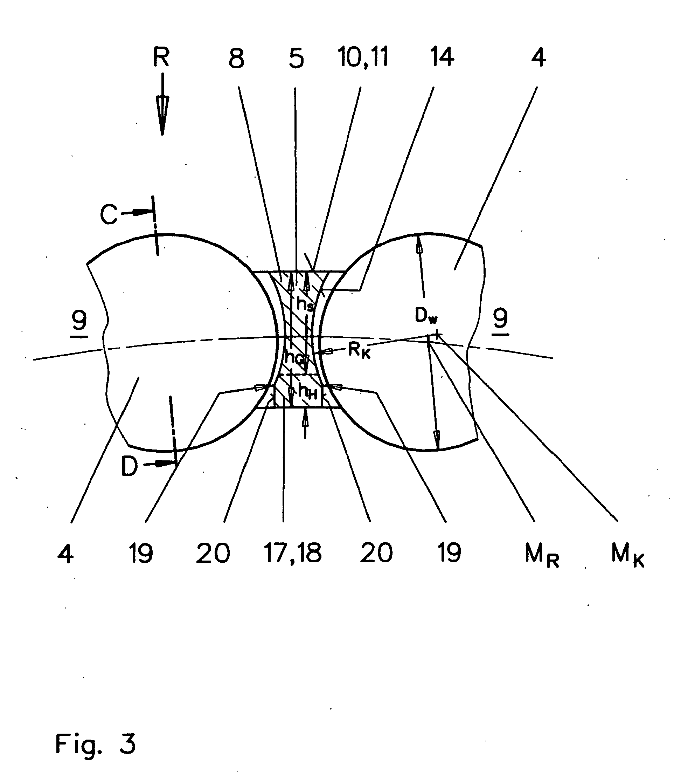

In Figur 1 ist ein Zylinderrollenlager 1 dargestellt, das in üblicher Weise einen Innenring 2, einen Außenring 3 und zwischen Innen- und Außenring angeordnete Zylinderrollen 4 aufweist. Zur Führung der Zylinderrollen ist ein Käfig 5 vorgesehen, der aus zwei Seitenringen 6 und 7 besteht, die über Stege (siehe Figuren 2 und 3) miteinander verbunden sind. Die Seitenringe 6 und 7 des Käfigs 5 bilden mit den Stegen 8 Aufnahmetaschen 9 für die Zylinderrollen 4 (siehe Figur 3).

Wie Figur 1 weiter entnommen werden kann, weist der Käfig 5 zwei radiale Endflächen 10 und 11 auf, die zur radialen Anlage an den Borden 12 und 13 des Außenrings 3 ausgebildet sind. Der Käfig 5 ist also schultergeführt.

Wie aus der Zusammenschau der Figuren hervorgeht, weisen die Stege 8 eine angepasste Kontur 14 auf, wobei es sich bei dieser Anpassung um die Kreisform der Zylinderrollen 4 handelt. Wie insbesondere Figur 3 entnommen werden kann, haben die Zylinderrollen 4 einen Rollendurchmesser D_{W}. Die Kontur 14 wird durch einen Kreisbogen gebildet, der den Radius R_{K} aufweist, der geringfügig größer ist als der Radius der Zylinderrolle. Weiterhin kann dieser Figur entnommen werden, dass der Mittelpunkt des Käfigtaschenradius M_{K} radial weiter außerhalb liegt als der Mittelpunkt des Wälzkörpers M_{R}. Durch diese Ausgestaltung wird ein besonders günstiges Anliegen der Rollen an den Stegen 8 des Käfigs 5 bewerkstelligt.

Wie Figur 2 entnommen werden kann, weist der Steg 8 an zwei axialen Stegpositionen 15 und 16 je einen Haltevorsprung 17 bzw. 18 auf. Die Haltevorsprünge 17, 18 haben - wie aus Figur 2 ersichtlich ist - eine radiale Erstreckung bzw. Höhe h_{H}, während die radiale Erstreckung h_{S} des Steges 8 sich oberhalb der Haltevorsprünge 17, 18 anschließt. Im Bereich der axialen Stegpositionen 15 und 16 ergibt sich damit die gesamte radiale Erstreckung des Steges 8 zum Wert h_{G}.

Figur 3 kann entnommen werden, dass die Haltevorsprünge 17, 18 zunächst noch - radial von außen kommend gesehen - die angepasste Kontur 14 aufweisen, dann jedoch eine radiale Übergangsposition 19 aufweisen, von der ab eine der Zylinderrolle zugewandte Fläche 20 des Haltevorsprungs 17, 18 beginnt, die sich im wesentlichen radial nach innen erstreckt. Dabei ist vorgesehen, dass sich die radiale Erstreckung h_{H} über einen Bereich ausdehnt, der zwischen 5 % und 15 % des Rollendurchmessers D_{W} liegt.

Das erfindungsgemäße Zylinderrollenlager hat also einen Käfig, dessen Stege 8 über eine vorgegebene radiale Erstreckung h_{S} eine der Kreisform der Zylinderrolle 4 angepasste Kontur 14 aufweist. An zumindest einer axialen Stegposition 15, 16 schließt sich dann ein Haltevorsprung 17, 18 für die Zylinderrolle 4 an, der sich im wesentlichen von der radialen Übergangsposition 19 ab an die der Kreisform der Zylinderrolle 4 angepasste Kontur 14 anschließt. Diese Erstreckung erfolgt radial nach innen, so dass sich die der Zylinderrolle 4 zugewandte Fläche 20 im wesentlichen parallel zur radialen Richtung R des Käfigs ausdehnt. Dies erfolgt über die radiale Erstreckung h_{H}, die zwischen 5 % und 15 % des Rollendurchmessers D_{W} liegt.

Durch diese Ausgestaltung wird eine hinreichend große Anlauffläche für die Zylinderrollen am Steg geschaffen. Es ergibt sich eine gute Schmiegung und damit ein begünstigter Schmierfilmaufbau.

Das Herausfallen der Zylinderrollen aus dem Käfig ist indes durch die Haltevorsprünge 17, 18 verhindert. Durch deren radiale Erstreckung ist jedoch durch den sich daraus ergebenden relativ großen Hebelarm eine gute Federung sichergestellt, so dass die Montage des Zylinderrollenlagers einfach durchführbar ist. Hierdurch wird es möglich, ein engeres Schnappmaß vorzusehen, was den Rollendurchhang reduziert und die Sicherheit gegen Herausfallen der Rollen erhöht.

Der vorgeschlagene Käfig des Zylinderrollenlagers kann dabei aus massivem Metall, beispielsweise Messing, hergestellt sein, wenngleich grundsätzlich auch Kunststoff als Käfigmaterial in Frage kommt. Im Falle der Ausbildung aus Metall werden die Aufnahmetaschen des Käfigs bevorzugt formgefräst.

### Bezugszeichenliste

- 1: Zylinderrollenlager
- 2: Innenring
- 3: Außenring
- 4: Zylinderrolle
- 5: Käfig
- 6: Seitenring
- 7: Seitenring
- 8: Steg
- 9: Aufnahmetasche
- 10: radiale Endfläche
- 11: radiale Endfläche
- 12: Bord
- 13: Bord
- 14: angepasste Kontur
- 15: axiale Stegposition
- 16: axiale Stegposition
- 17: Haltevorsprung
- 18: Haltevorsprung
- 19: radiale Übergangsposition
- 20: zugewandte Fläche des Haltevorsprungs
- D_{W}: Rollendurchmesser
- h_{S}: radiale Erstreckung des Steg
- R: radiale Richtung
- h_{H}: radiale Erstreckung des Haltevorsprunges
- h_{G}: gesamte radiale Erstreckung des Steges
- R_{K}: Radius der angepassten Kontur
- M_{K}: Mittelpunkt des Käfigtaschenradius
- M_{R}: Mittelpunkt des Wälzkörpers

## Patentansprüche

1. Zylinderrollenlager (1), das einen Innenring (2), einen Außenring (3), zwischen diesen angeordnete Zylinderrollen (4) mit einem definierten Rollendurchmesser (D_{W}) sowie einen Käfig (5) für die Führung der Zylinderrollen (4) aufweist,
wobei der Käfig (5) zwei parallel zueinander angeordnete Seitenringe (6, 7) aufweist, die durch Stege (8) miteinander verbunden sind, wobei die Seitenringe (6, 7) und die Stege (8) Aufnahmetaschen (9) für die Zylinderrollen (4) bilden und
wobei die Seitenringe (6, 7) so ausgebildet sind, dass sie zur Führung des Käfigs (5) mit einer radialen Endfläche (10, 11) an sich radial erstreckenden Borden (12, 13) an einem der Lagerringe (3) anlaufen,
**dadurch gekennzeichnet,**
**dass** die der Zylinderrolle (4) zugewandte Fläche des Steges (8) über eine vorgegebene radiale Erstreckung (h_{S}) des Steges (8) eine einzige der Kreisform der Zylinderrolle (4) angepasste Kontur (14) aufweist und
**dass** an mindestens einer axialen Stegposition (15, 16) ein Haltevorsprung (17, 18) für die Zylinderrolle (4) angeordnet ist, der sich von einer radialen Übergangsposition (19) ab an die der Kreisform der Zylinderrolle (4) angepasste Kontur (14) anschließt, der sich radial nach innen erstreckt und der sich mit seiner der Zylinderrolle (4) zugewandten Fläche (20) im wesentlichen parallel zur radialen Richtung (R) des Käfigs über eine radiale Erstreckung (h_{H}) ausdehnt, die zwischen 5 % und 15 % des Rollendurchmessers (D_{W}) liegt,
wobei der Mittelpunkt (M_{K}) des die angepasste Kontur (14) bildenden einzigen Kreisbogens radial weiter weg von der Drehachse des Zylinderrollenlagers (1) liegt als der Mittelpunkt (M_{R}) der Zylinderrolle im montierten Zustand des Zylinderrollenlagers (1).

2. Zylinderrollenlager nach Anspruch 1, **dadurch gekennzeichnet, dass** der Steg (8) im Bereich der axialen Stegposition (15, 16), in der der Haltevorsprung (17, 18) angeordnet ist, eine Ausdehnung (h_{G}) in radialer Richtung (R) aufweist, die über die radiale Erstreckung des Steges (h_{S}) hinausgeht.

3. Zylinderrollenlager nach Anspruch 1 oder 2, **dadurch gekennzeichnet, dass** die der Kreisform der Zylinderrolle (4) angepasste Kontur (14) im Schnitt eine Kreisform aufweist, deren Radius (R_{K}) größer ist als der der Zylinderrolle (4).

4. Zylinderrollenlager nach Anspruch 3, **dadurch gekennzeichnet, dass** der Radius (R_{K}) der angepassten Kontur (14) das 1,002 bis 1,3-fache des Radius der Zylinderrolle (4) beträgt.

## Claims

1. A cylindrical roller bearing (1) which has an inner ring (2), an outer ring (3), and cylindrical rollers (4), arranged between them, of a specific roller diameter (D_{w}), and also a cage (5) for guiding the cylindrical rollers (4),
wherein the cage (5) has two side rings (6,7) which are arranged parallel to one another and which are joined together by webs (8), wherein the side rings (6,7) and the webs (8) form accommodating pockets (9) for the cylindrical rollers (4) and
wherein the side rings (6,7) are so formed that, to guide the cage (5), they abut with a radial end surface (10,11) against radially extending flanges (12,13) on one of the bearing rings (3),
**characterised in**
**that** the surface of the web (8) nearest the cylindrical roller (4) has over a predetermined radial extension (hₛ) of the web (8) a single contour (14) matching the circular shape of the cylindrical roller (4) and
in that a retaining projection (17,18) for the cylindrical roller (4) is provided at at least one axial web position (15,16), which projection from a radial transitional position (1) adjoins the contour (14) which matches the circular shape of the cylindrical roller (4) and which extends radially inwards and which with its surface (20) nearest the cylindrical roller (4) extends substantially parallel to the radial direction (R) of the cage over a radial extension (h_{H}) which is between 5 % and 15 % of the roller diameter (D_{w}),
wherein the centre point (M_{K}) of the single circular arc forming the matching contour (14) is situated radially further away from the axis of rotation of the cylindrical roller bearing (1) than the centre point (M_{R}) of the cylindrical roller in the assembled condition of the cylindrical roller bearing (1).

2. A cylindrical roller bearing according to Claim 1, **characterised in that**, in the vicinity of the axial web position (15,16) in which the retaining projection (17) is disposed, the web (8) has an extent (h_{G}) in radial direction (R) which is greater than the radial extent of the web (hs).

3. A cylindrical roller bearing according to Claim 1 or 2, **characterised in that** the contour (14) matching the circular shape of the cylindrical roller (4) is of circular shape in section, the radius (R_{K}) of which is greater than that of the cylindrical roller (4).

4. A cylindrical roller bearing according to Claim 3, **characterised in that** the radius (R_{K}) of the matching contour (14) is 1.002 to 1.3 times the radius of the cylindrical roller (4).

## Revendications

1. Roulement à rouleaux cylindriques (1), qui comprend une bague interne (2) et une bague externe (3) avec, entre ces bagues, des rouleaux cylindriques (4) ayant un diamètre (D_{W}) défini ainsi qu'une cage (5) pour le guidage des rouleaux cylindriques (4), cette cage (5) présentant des barrettes (8) reliant entre elles deux bagues latérales (6, 7) parallèles entre elles et formant avec les barrettes des poches d'accueil (9) pour les rouleaux cylindriques (4), les bagues latérales (6, 7) étant constituées de manière que pour guider la cage (5), elles présentent une portée radiale d'extrémité (10, 11) se déplaçant le long des bords (12, 13) d'une des bagues de roulement (3), **caractérisé en ce que** :
- la surface de la barrette (8) en regard du rouleau cylindrique (4) présente, sur une étendue radiale prédéfinie (hS) de cette barrette (8), un contour (14) qui est adapté à la forme circulaire du rouleau cylindrique (4),
- sur au moins une position axiale de barrette (15, 16) est disposée, pour le rouleau cylindrique (4), une saillie de maintien (17, 18) qui, à partir d'une position radiale de transition (19) se raccorde au contour (14) adapté à la forme circulaire du rouleau cylindrique (4), cette saillie qui s'étend radialement vers l'intérieur en étant essentiellement parallèle à la direction radiale (R) de la cage avec une face (20) disposée en regard du rouleau cylindrique (4), présente une étendue radiale (hH) comprise entre 5 et 15 % du diamètre (D_{w}) des rouleaux,
étant précisé que le centre (M_{K}) de l'arc de cercle formant le contour ajusté (14) est radialement plus éloigné de l'axe de rotation du roulement à rouleaux cylindriques (1) que le centre (M_{R}) du rouleau cylindrique correspondant quand le roulement à rouleaux cylindriques est monté.

2. Roulement à rouleaux cylindriques selon la revendication 1, **caractérisé en ce que** la barrette (8) dans la zone de la position axiale de barrette (15, 16) où se trouve la saillie de maintien (17, 18) présente en direction radiale (R) une étendue (h_{G}) qui dépasse l'étendue radiale (h_{S}) de la barrette.

3. Roulement à rouleaux cylindriques selon la revendication 1 ou 2, **caractérisé en ce que** le contour (14) ajusté à la forme du rouleau cylindrique (4) présente en coupe une forme circulaire dont le rayon (R_{K}) est supérieur à celui du rouleau cylindrique (4).

4. Roulement à rouleaux cylindriques selon la revendication 3, **caractérisé en ce que** le rayon (R_{K}) du contour (14) ajusté est de 1,002 à 1,3 fois celui du rouleau cylindrique (4).
